Europäisches Patentamt

European Patent Office

Office européen des brevets

(11) Numéro de publication: **0 319 428**
A1

# (12) DEMANDE DE BREVET EUROPEEN

(21) Numéro de dépôt: **88403052.9**

(22) Date de dépôt: **02.12.88**

(51) Int. Cl.⁴: **B 60 R 25/04**

(30) Priorité: **04.12.87 FR 8717108**

(43) Date de publication de la demande:
**07.06.89 Bulletin 89/23**

(84) Etats contractants désignés:
**AT BE CH DE ES FR GB GR IT LI LU NL SE**

(71) Demandeur: **Faure, Christian**
**4 Allée des Cenêts**
**F-33210 Toulenne (FR)**

(72) Inventeur: **Faure, Christian**
**4 Allée des Cenêts**
**F-33210 Toulenne (FR)**

(74) Mandataire: **Chereau, Louis**
**NOVAPAT-CABINET CHEREAU 63bis, Boulevard**
**Bessières**
**F-75017 Paris (FR)**

(54) **Dispositif de sécurité constitué d'un émetteur portable émettant un signal codé et d'un récepteur fixe.**

(57) La présente invention concerne un dispositif de sécurité du type comportant un émetteur portable et un récepteur fixe coupant l'alimentation du moteur d'un véhicule lorsque la distance entre l'émetteur portable et le récepteur fixe dépasse une certaine valeur. L'émetteur émet avantageusement des séquences codées et comporte une horloge commandant l'alimentation de l'étage de puissance. Le récepteur comporte avantageusement un circuit de temporisation maintenant la sortie pendant une durée au moins égale à la durée séparant deux séquences codées.

EP 0 319 428 A1

**Description**

## Dispositif de sécurité constitué d'un émetteur portable émettant un signal codé et d'un récepteur fixe.

La présente invention concerne un dispositif de sécurité destiné à des véhicules à moteur et plus particulièrement à des automobiles, des motocyclettes ou des bateaux à moteur. On connaît dans l'état de la technique des dispositifs de sécurité destinés à la commande à distance du verrouillage des portes d'un véhicule automobile.

Le brevet américain 3.725.939 décrit un dispositif de sécurité constitué par un émetteur portable émettant de façon continue, c'est-à-dire sans action manuelle sur un interrupteur, un signal haute-fréquence. Le véhicule comporte un récepteur fixe dont la sortie commande le déverrouillage de l'ouverture d'une porte lorsqu'il détecte le signal haute-fréquence émis par l'émetteur portable. En l'absence dudit signal, la porte est verrouillée.

Ce dispositif ne permet pas d'atteindre un niveau de sécurité suffisant. En effet, le nombre de fréquences autorisées au regard des législations internationales est trop faible pour garantir une personnalisation satisfaisante de chaque système. En conséquence, la probabilité pour qu'un tiers dispose d'un émetteur rayonnant sur la même fréquence, et donc soit en mesure de provoquer le déverrouillage de la porte lorsqu'il s'approche du véhicule d'un tiers équipé d'un récepteur fonctionnant sur la même fréquence, est significative.

Par ailleurs, il arrive fréquemment qu'un automobiliste, en particulier un livreur, sorte de son véhicule sans refermer la porte ni couper le moteur, le temps de déposer un objet ou d'ouvrir un portail. Dans ce cas, le dispositif de sécurité conforme à l'état de la technique n'apporte aucune garantie contre un vol éventuel du véhicule.

Le brevet allemand 2.824.421 décrit un autre dispositif de sécurité constitué par un émetteur infra-rouge, radio ou micro-ondes codé par un algorythme complexe mettant en oeuvre des moyens informatiques perfectionnés. Ce dispositif nécessite une mise en marche manuelle par action sur une touche ou sur un interrupteur en vue du déverrouillage ou du verrouillage du véhicule. Si l'utilisateur oublie de se servir dudit dispositif, son véhicule n'est pas protégé.

La présente invention vise à résoudre avec une sécurité accrue le problème consistant à provoquer l'arrêt immédiat et automatique du moteur d'un véhicule, en particulier d'un véhicule à moteur à explosion, lorsque l'émetteur portable et le récepteur fixe sont éloignés d'une distance supérieure à quelques mètres, et à commander un ou plusieurs accessoires électriques dudit véhicule .

La présente invention concerne plus particulièrement un dispositif de sécurité consituté d'une part d'un émetteur portable émettant de façon continue des signaux haute-fréquence et d'autre part d'un récepteur délivrant un signal de commande d'un circuit électrique lorsque la distance entre l'émetteur et le récepteur est inférieure à une distance minimale, le signal de sortie délivré par le récepteur commandant en outre des moyens d'interruption du circuit d'allumage d'un moteur à explosion lorsque le récepteur ne reçoit pas la porteuse haute-fréquence émise par ledit émetteur portable.

Le dispositif de sécurité selon la présente invention présente l'avantage essentiel de couper automatiquement, sans aucune intervention manuelle, le moteur dudit véhicule lorsque le porteur de l'émetteur mobile s'éloigne volontairement ou involontairement du récepteur fixe monté sur le véhicule au-delà d'une certaine distance. Ce résultat est particulièrement important pour des raisons de sécurité lorsque le véhicule est constitué par un bateau à moteur: si son pilote tombe à la mer, le bateau poursuit sur son erre et s'arrête rapidement en raison de l'arrêt du moteur. Le récepteur peut en outre commander le blocage du gouvernail sur un bord. Des applications similaires existent pour tout engin dont le déplacement en l'absence de contrôle constitue un danger. De même, sur un véhicule automobile, l'éloignement du conducteur négligent n'ayant pas pris la précaution d'arrêter le moteur lors d'un bref arrêt provoque automatiquement l'arrêt du moteur et éventuellement commande des fonctions telles que le verrouillage des portes, la remontée des glaces, la mise hors service des accessoires tels que auto-radio, éclairage intérieur ou la mise en service d'une alarme. Le rapprochement du possesseur de l'émetteur portable provoque le déverrouillage des portes et éventuellement le démarrage du moteur dès que la distance entre l'émetteur portable et le récepteur fixe est suffisamment faible pour que le signal haute-fréquence soit correctement reçu.

L'émetteur portable est avantageusement réalisé sous forme d'une carte ou d'un porte-clé.

Selon un mode de réalisation préféré de la présente invention, le dispositif de sécurité est constitué par un émetteur portable comportant des moyens de modulation de la porteuse haute-fréquence par un signal numérique de codage et une horloge commandant l'alimentation électrique de l'étage de puissance, et le récepteur comporte des moyens de détection du début de la séquence codée reçue et des moyens de comparaison de ladite séquence codée avec le code contenu dans une mémoire électronique, ainsi que des moyens de temporisation maintenant l'état du signal de sortie du récepteur pendant une durée au moins égale à la durée séparant deux séquences codées émises par l'émetteur portable, le signal de sortie commandant des moyens d'interruption du circuit d'alimentation d'un moteur à explosion lorsque le récepteur ne reçoit pas la porteuse et/ou lorsque la séquence codée reçue ne correspond pas au code inscrit dans la mémoire du récepteur.

Le dispositif selon la présente invention présente deux avantages essentiels: une grande autonomie et une personnalisation efficace de chaque dispositif.

La grande autonomie est obtenue grâce à l'émission de séquences codées au lieu d'un signal continu codé. La consommation de l'émetteur portable est négligeable pendant les intervalles de temps séparant les périodes d'alimentation de l'étage de puissance, commandées par l'horloge. Il devient de ce fait possible de réaliser un émetteur portable très compact, fonctionnant à l'aide de source de tension miniaturisée du type pile à mercure employée habituellement pour des montres-bracelet. Cette particularité est essentielle pour un dispositif devant fonctionner sans intervention manuelle volontaire sur un interrupteur de mise en marche.

Le deuxième avantage résulte du nombre important de combinaisons accessibles par un codage numérique. A titre d'exemple, un codage avec un signal de 3000 octets permet de définir environ trois millions de codes différents. Il est donc pratiquement exclu qu'un porteur d'émetteur portable ne déclenche la mise en route d'un véhicule ne lui appartenant pas. Cette condition est indispensable dans la mesure ou le démarrage est assuré automatiquement.

Selon une variante préférée, la période de l'horloge commandant l'alimentation de l'étage de puissance de l'émetteur portable est au moins dix fois supérieure à la durée de la séquence codée émise par ledit émetteur. En d'autres termes, les périodes de fonctionnement de l'étage de puissance sont séparées par des périodes de non-fonctionennement d'une durée au moins dix fois supérieure. L'autonomie de la source d'alimentation est ainsi fortement augmentée.

Selon une variante avantageuse, la fréquence d'échantillonnage du signal numérique de codage est au moins mille fois supérieure à la fréquence de l'horloge commandant l'alimentation de l'étage de puissance. Selon une première variante, la période de l'horloge commandant l'alimentation de l'étage de puissance est comprise entre 0,2 et 3 secondes. Cette variante concerne plus particulièrement les applications pour lesquelles l'arrêt du moteur doit être quasi-immédiat en cas de disparition du porteur de l'émetteur portable, par exemple dans le cas des bateaux à moteur.

Selon un mode de mise en oeuvre particulier de cette variante, le récepteur fixe est disposé sur un bateau à voile et commande, en cas de chute du navigateur, le déclenchement d'une balise radio-émettrice de sécurité, et/ou le largage d'une bouée ou d'un canot de survie et/ou le largage d'un produit traçant de signalisation et/ou le débrayage d'un pilote automatique.

Selon une deuxième variante, la période de l'horloge commandant l'alimentation de l'étage de puissance est comprise entre 1 et 10 secondes. Cette variante concerne plus particulièrement les applications pour lesquelles les critères d'autonomie de l'émetteur sont déterminants et pour lesquelles le temps de réponse est peu critique par exemple dans le cas des véhicules automobiles.

La présente invention concerne également un dispositif de sécurité constitué par un émetteur portable émettant des séquences de signaux sur une première fréquence associé à un récepteur portable disposé sur le même support et commandant l'alimentation de l'étage de puissance dudit émetteur portable lorsqu'il reçoit le signal d'un émetteur disposé sur le véhicule à protéger.

Le dispositif selon cette variante permet d'accroître encore l'autonomie de la source de tension de l'émetteur portable dans la mesure où l'étage de puissance n'est alimenté que lorsque le propriétaire du véhicule se trouve à proximité dudit véhicule, et en conséquence de l'émetteur fixe. Le signal émis par l'émetteur fixe peut être une simple porteuse, ou un signal codé.

Selon un mode de réalisation avantageux, le support portable de l'émetteur portable et éventuellement du récepteur associé comporte des moyens de connection reliés d'une part à la source de tension de l'émetteur portable. Ces moyens de connection permettent de recharger la source de tension.

Selon un autre mode de réalisation, le support portable comporte des moyens de connection reliés à une mémoire dans laquelle est inscrit un code.

D'autres avantages et modes de réalisation ressortiront mieux de la description qui va suivre, s'appuyant sur les figures où:

La figure 1 représente la schéma de principe de l'émetteur portable;

La figure 2 représente une séquence de signaux émis par l'émetteur portable;

La figure 3 représente le schéma de principe du récepteur fixe.

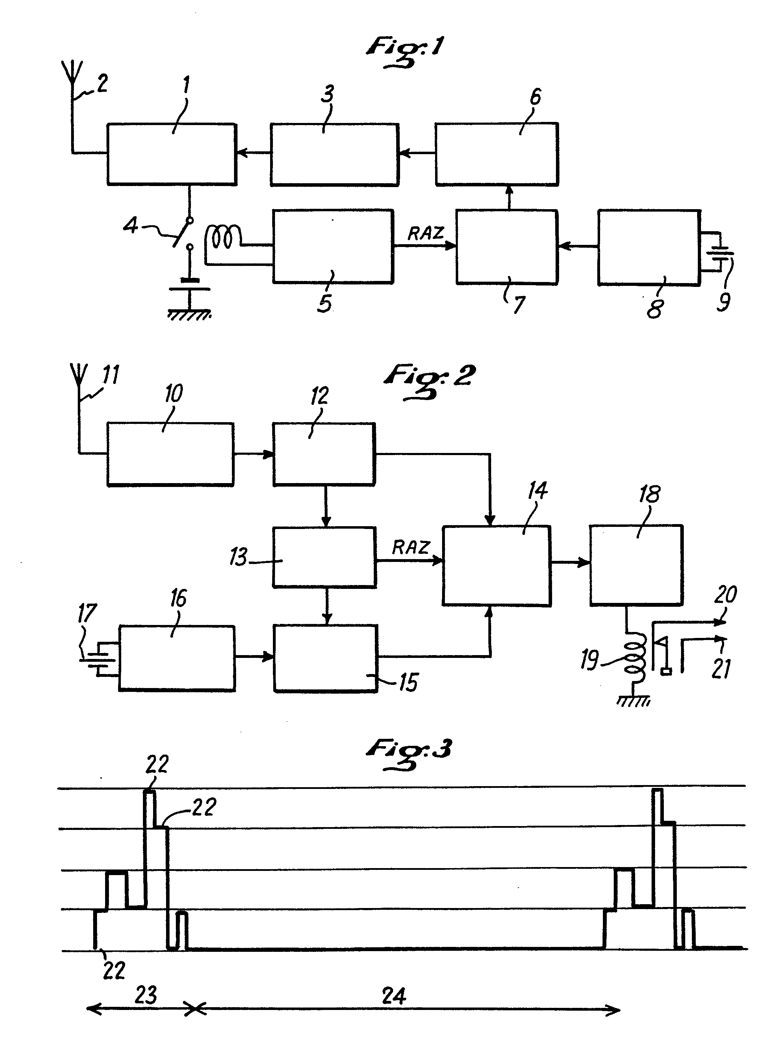

L'émetteur représenté en figure 1 comporte un étage haute-fréquence (1) délivrant un signal de faible puissance à une antenne (2). A titre d'exemple la puissance rayonnée est de l'ordre de 1 microwatt. L'étage de puissance est excité par un oscillateur haute-fréquence (3) de préférence régulé par quartz. A titre d'exemple non limitatif, la fréquence d'emission est de 152,575 mégahertz. L'alimentation de l'étage de puissance (1) est contrôlée par un relais (4) ou un système électronique équivalent commandé par une horloge (5). A titre d'exemple, ladite horloge (5) délivre des impulsions d'une durée de 0,07 secondes et d'une période de 2,9 secondes. L'oscillateur (3) est modulé par un étage de modulation (6) en amplitude, ou éventuellement en fréquence. Le signal de modulation est délivré par une mémoire électronique (7) ou un circuit équivalent commandés par une seconde horloge (8) régulée de préférence par un quartz (9). A titre d'exemple la mémoire (7) contient 3000 octets et la fréquence d'échantillonnage est d'environ 50 kilohertz. L'horloge (5) délivre avantageusement un signal de remise à zéro de l'adressage de la mémoire.

Selon une variante, l'horloge (5) est remplacée par un récepteur fonctionnant sur une fréquence décallée par rapport à la fréquence d'émission de l'émetteur portable et commandant l'alimentation de l'étage de puissance (1) lorsqu'elle reçoit un signal émis par un récepteur fixe disposé sur le véhicule à protéger.

La figure 2 représente le schéma de principe du récepteur fixe disposé sur le véhicule à protéger. Il comporte un étage de détection haute-fréquence (10) relié à une antenne (11) et délivrant un signal à un discriminateur (12). Le discriminateur attaque d'une part un détecteur de début de séquences codées (13) et d'autre part un comparateur (14).

Le détecteur de début de séquence (13) est constitué par un circuit détectant le front montant de la séquence codée reçue par le récepteur, ou par tout circuit équivalent connu de l'homme de métier.

Le comparateur logique (14) compare le signal transmis par le discriminateur (12) aux séquences enregistrées dans une mémoire (15) adressée par une horloge (16) commandée par un quartz (17). Bien entendu, la fréquence de l'horloge (16) est strictement identique à la fréquence de l'horloge (8) de l'émetteur. Lorsque le signal transmis par le discriminateur (12) est conforme à la séquence inscrite en mémoire (15), le comparateur (14) délivre un signal à un circuit de temporisation (18). Ce circuit de temporisation maintient l'état du signal de sortie commandant un relais (19) ou un circuit équivalent pendant une durée qui est supérieure à la durée séparant deux séquences codées afin d'éviter une interruption abusive en cas de parasites ou plus généralement en cas de perturbation accidentelle du signal haute-fréquence reçu. A titre d'exemple, pour un véhicule automobile, la durée de la temporisation est égale au triple de la durée séparant deux séquences codées. Le relais (19) comporte des sorties actives au repos (20) et des sorties actives en position travail (21). Les sorties (20) alimentent avantageusement le verrouillage des portes, un vérin de blocage du capot, la remontée des glaces et la mise en fonctionnement d'une alarme. Les sorties (21) alimentent avantageusement l'alimentation du moteur, par exemple la bobine d'un moteur à explosion à 4 temps.

La figure 3 représente un exemple d'une série de séquences de signaux codés délivrés par l'étage de modulation (6) de l'émetteur portable ou détecté par le discriminateur (12) du récepteur. Il comporte des impulsions rectangulaires (22) d'une amplitude variable. Dans l'exemple représenté, le codage s'effectue sous forme de signaux de 4 bits. La durée de la séquence codée (23) est nettement inférieure à la durée (24) séparant deux séquences d'impulsions.

Bien entendu, la présente invention n'est en aucun cas limitée aux exemples décrits afin d'améliorer sa compréhension, mais s'étend au contraire à toutes les variantes, quels que soient les domaines d'application.

**Revendications**

1) Dispositif de sécurité constitué d'une part d'un émetteur portable émettant de façon continue des signaux haute-fréquence et d'autre part d'un récepteur délivrant un signal de commande d'un circuit électrique lorsque la distance entre l'émetteur et le récepteur est inférieure à une distance minimale, caractérisé en ce que le signal de sortie délivré par le récepteur commande des moyens de sécurité d'un véhicule.

2) Dispositif de sécurité selon la revendication 1 constitué d'une part d'un émetteur portable émettant de façon continue des signaux haute-fréquence et d'autre part d'un récepteur délivrant un signal de commande d'un circuit électrique lorsque la distance entre l'émetteur et le récepteur est inférieure à une distance minimale, caractérisé en ce que le signal de sortie délivré par le récepteur commande en outre des moyens d'interruption du circuit d'allumage d'un moteur à explosion lorsque le récepteur ne reçoit pas la porteuse haute-fréquence émise par ledit émetteur portable.

3) Dispositif de sécurité selon l'une quelconque des revendications 1 à 2, caractérisé en ce qu'il est constitué par un émetteur portable comportant des moyens de modulation (7) de la porteuse haute-fréquence par un signal numérique de codage et une horloge (5) commandant l'alimentation électrique de l'étage de puissance (1), et par un récepteur comportant des moyens de détection (13) du début de la séquence codée (23) reçue et des moyens de comparaison (14) de ladite séquence codée (23) avec le code contenu dans une mémoire électronique (15), ainsi que des moyens de temporisation (18) maintenant l'état du signal de sortie du récepteur pendant une durée au moins égale à la durée (24) séparant deux séquences codées émises par l'émetteur portable, le signal de sortie commandant des moyens d'interruption du circuit d'alimentation d'un moteur à explosion lorsque le récepteur ne reçoit pas la porteuse et/ou lorsque la séquence codée reçue ne correspond pas au code inscrit dans la mémoire du récepteur.

4) Dispositif de sécurité selon la revendication 3, caractérisé en ce que la durée (24) séparant deux séquences successives de signaux codés émis par l'émetteur portable est au moins dix fois supérieure à la durée (23) de ladite séquence codée.

5) Dispositif de sécurité selon l'une quelconque des revendications 3 à 4, caractérisé en ce que la fréquence de l'horloge (8) commandant la mémoire (7) de l'émetteur portable est au moins mille fois supérieure à la fréquence de l'horloge (5) commandant la durée des séquences d'émission.

6) Dispositif de sécurité, en particulier pour bateau à moteur, selon l'une quelconque des revendications 3 à 5, caractérisé en ce que la période de l'horloge (5) commandant l'alimentation de l'étage de puissance (1) de l'émetteur portable est comprise entre 0,2 et 3 secondes.

7) Dispositif de sécurité, en particulier pour bateau à voile, selon l'une quelconque des revendications 1 à 6, caractérisé en ce que le récepteur commande la mise en marche d'une balise radio-émettrice et /ou le largage d'une bouée ou d'un canot de survie et/ou le débrayage d'un pilote automatique et/ou le largage de produits traçants.

8) Dispositif de sécurité, en particulier pour véhicule automobile, selon l'une quelconque des revendications 3 à 5, caractérisé en ce que la période de l'horloge (5) commandant l'alimentation de l'étage de puissance (1) de l'émetteur portable est comprise entre 1 et 10 secondes.

9) Dispositif de sécurité selon l'une quelconque des revendications 1 à 8, caractérisé en ce qu'il comporte en outre un émetteur fixe délivrant un signal haute-fréquence et un récepteur portable associé à l'émetteur portable et commandant l'alimentation de l'étage de puissance (1) dudit émetteur portable lorsqu'il reçoit le signal émis par l'émetteur fixe.

10) Dispositif selon la revendication 9, caractérisé en ce que l'émetteur fixe émet des séquences de signaux codés et en ce que le récepteur associé à l'émetteur portable commande l'alimentation de l'étage de puissance (1) lorsqu'il reçoit les signaux haute-fréquence et lorsque la séquence codée détectée correspond au code inscrit en mémoire.

11) Dispositif selon l'une quelconque des revendications 1 à 10, caractérisé en ce que le support de l'émetteur portable comporte en outre des connecteurs électriques reliés à la source d'alimentation dudit émetteur portable.

12) Dispositif selon l'une quelconque des revendications 1 à 11, caractérisé en ce que le support de l'émetteur portable comporte en outre des moyens de transfert d'une information codée.

EP 0 319 428 A1

*Fig.1*

*Fig.2*

*Fig.3*

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | EP-A-0 153 613 (ALLIED CORP.) <br> * Page 3, ligne 9 - page 4, ligne 14; figure 4 * | 1 | B 60 R 25/04 |
| A | --- | 2,3 | |
| X | US-A-4 189 712 (LEMELSON) <br> * Colonne 3, ligne 23 - colonne 4, ligne 32; figure 1 * | 1 | |
| A | --- | 2,3 | |
| D,A | DE-A-2 824 421 (BOSCH GmbH) <br> * Page 6, ligne 28 - page 7, ligne 3; page 8, lignes 15-23; page 10, lignes 1-14; figure 1 * | 1-3 | |
| D,A | US-A-3 725 939 (SALZSTEIN) <br> * Colonne 1, lignes 1-61; figures 1,4 * <br> ----- | 1-3 | |

DOMAINES TECHNIQUES
RECHERCHES (Int. Cl.4)

B 60 R
E 05 B

**Le présent rapport a été établi pour toutes les revendications**

| Lieu de la recherche | Date d'achèvement de la recherche | Examinateur |
|---|---|---|
| LA HAYE | 10-03-1989 | MAUSSER,T. |

EPO FORM 1503 03.82 (P0402)